(19) Europäisches Patentamt
European Patent Office
Office européen des brevets

(11) EP 4 553 110 A1

(12) **EUROPEAN PATENT APPLICATION**
published in accordance with Art. 153(4) EPC

(43) Date of publication:
**14.05.2025 Bulletin 2025/20**

(21) Application number: **23860881.4**

(22) Date of filing: **30.08.2023**

(51) International Patent Classification (IPC):
***C08K 13/02*** *(2006.01)* ***C08K 3/013*** *(2018.01)*
***C09K 5/02*** *(2006.01)* ***H01M 10/653*** *(2014.01)*
***H01M 50/218*** *(2021.01)*

(52) Cooperative Patent Classification (CPC):
**C08K 3/013; C08K 13/02; C09K 5/02; H01M 10/653; H01M 50/218;** Y02E 60/10

(86) International application number:
**PCT/KR2023/012910**

(87) International publication number:
**WO 2024/049205 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.08.2022 KR 20220108817**
**28.08.2023 KR 20230113206**

(71) Applicants:
- **LG Chem, Ltd.**
  **Yeongdeungpo-gu**
  **Seoul 07336 (KR)**
- **LG Energy Solution, Ltd.**
  **Seoul 07335 (KR)**

(72) Inventors:
- **LEE, Seung Min**
  **Daejeon 34122 (KR)**
- **CHOI, Bum**
  **Daejeon 34122 (KR)**
- **JUNG, Jin Mi**
  **Daejeon 34122 (KR)**
- **LEE, Hong Chan**
  **Daejeon 34122 (KR)**
- **KIM, Gae Sung**
  **Daejeon 34122 (KR)**
- **AHN, Soo Jun**
  **Daejeon 34122 (KR)**
- **PARK, Tae Young**
  **Daejeon 34122 (KR)**

(74) Representative: **Hoffmann Eitle**
**Patent- und Rechtsanwälte PartmbB**
**Arabellastraße 30**
**81925 München (DE)**

(54) **COMPOSITION**

(57) The present application relates to a composition and a use thereof. The composition of the present application can be applied to a product that generates heat in driving or maintenance processes, thereby being used as a material capable of treating the heat. The composition of the present application can be applied to a product in which a plurality of heat-generating elements is integrated, thereby efficiently treating the heat generated from the elements while maintaining the temperature of the product uniformly. In addition, the composition of the present application is applied to the product, whereby even if abnormal heat generation, explosion or ignition occurs in any one element among the plurality of elements, it is possible to prevent or minimize the effect of such heat generation, explosion, or ignition on other adjacent elements.

[Figure 3]

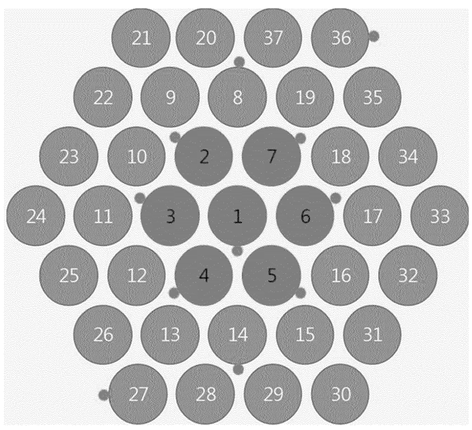


EP 4 553 110 A1

## Description

[Technical Field]

This application claims the benefit of priority based on Korean Patent Application No. 10-2022-0108817 dated August 30, 2022, and Korean Patent Application No. 10-2023-0113206 dated August 28, 2023, the disclosures of which are incorporated herein by reference in their entirety.

The present application relates to a composition, a cured body, a method for preparing the composition, and a battery module.

[Background Art]

Batteries can be broadly classified into primary and secondary batteries. Secondary batteries are also called rechargeable batteries, which can be repeatedly charged and used. Secondary batteries can be exemplified by nickel-cadmium batteries, nickel-metal hybrid batteries, nickel-hydrogen batteries, or lithium secondary batteries, and the like.

Secondary batteries have emerged as a major energy storage technology and are applied or studied for application in various fields, including home appliance, industry, transportation, and power storage fields, and the like.

Depending on the use, a so-called battery module may be constructed using a plurality of battery cells, or a so-called battery pack may be constructed using a plurality of battery modules.

For example, when the secondary battery is used as a power source for so-called electric vehicles such as electric propulsion vehicles, hybrid electric vehicles (HEVs), battery electric vehicles (BEVs), or plug-in hybrid electric vehicles (PHEVs), a battery module or a battery pack is constructed using a plurality of unit battery cells to meet required power and capacity requirements.

In the battery module or battery pack, the plurality of unit battery cells is located relatively adjacent to each other. Therefore, heat or fire generated from any one or some battery cells inside the battery module or battery pack can easily affect other adjacent battery cells, and in some cases, chain ignition or explosions, and the like can be caused.

[Disclosure]

[Technical Problem]

The present application relates to a composition and a use thereof. The composition of the present application can be applied to a product that generates heat in driving or maintenance processes, thereby being used as a material capable of treating the heat. The composition of the present application can be applied to a product in which a plurality of heat-generating elements is integrated, thereby efficiently treating the heat generated from the elements while maintaining the temperature of the product uniformly. In addition, the composition of the present application is applied to the product, whereby even if abnormal heat generation, explosion or ignition occurs in any one element among the plurality of elements, it is possible to prevent or minimize the effect of such heat generation, explosion, or ignition on other adjacent elements. The composition of the present application can also stably perform the above functions over a long period of time.

The present application can also provide a cured body formed by the composition, or a use of the composition or the cured body.

[Technical Solution]

Among physical properties mentioned in this specification, the physical property affected by a temperature is a physical property measured at room temperature, unless otherwise specified.

In this specification, the term room temperature is a natural temperature without warming or cooling, which means, for example, any one temperature in a range of about 10°C to 30°C, for example, a temperature of about 23°C, or 25°C or so. In addition, unless otherwise specified in this specification, the unit of temperature is °C.

Among physical properties mentioned in this specification, the physical property affected by a pressure is a physical property measured at normal pressure, unless otherwise specified. The term normal pressure is a natural pressure without pressurization or depressurization, which usually refers to about 1 atm (about 700 to 800 mmHg or so) as normal pressure.

Among physical properties mentioned in this specification, the physical property affected by humidity is a physical property measured at the standard-state humidity, unless otherwise specified. In this specification, the standard-state humidity means humidity of about 40%, or 50% or so as relative humidity.

In this specification, the term heat-generating product means a product, which generates heat during operation or

storage processes, or includes heat-generating members (heat-generating elements), that such heat must be controlled for reasons such as product performance and/or stability.

The present application relates to a composition. In this specification, the term composition means a mixture of two or more components, or a component comprising chemical or physical reactants of the two or more components.

The composition may be a composition that can be cured, that is, a curable composition. In this specification, the term curing is a phenomenon in which hardness and/or viscosity of a composition increases due to physical and/or chemical reactions, or interactions.

The composition may be an energy-beam curing type, a moisture-curing type, a heat-curing type, or a room temperature-curing type, or a hybrid curing type in which two or more of the above curing methods are applied.

In the energy beam-curing composition, the composition can be cured by a method of irradiating it with energy beams such as ultraviolet rays; in the moisture-curing composition, the composition can be cured by a method of maintaining the composition under appropriate moisture; in the heat-curing composition, the composition can be cured by a method of applying appropriate heat to the composition; and in the room temperature-curing composition, the composition can be cured by a method of maintaining the composition at room temperature. In the hybrid curing composition, the composition can be cured by applying two or more of the above methods simultaneously or by applying them in stages. In one example, the composition of the present application may be a room temperature curing composition. For example, the composition of the present application can be cured in a state of being maintained at room temperature without separate energy beam irradiation and moisture application, and the like.

The composition of the present application may be a one-component composition or a two-component composition. The one-component composition is a composition in which components necessary for curing are stored in a mixed state, and the two-component composition is a composition in which components necessary for curing are stored in a physically separated state. The two-component composition usually comprises so-called main agent part and curing agent part, and for curing, the main agent and curing agent parts are mixed. When the composition of the present application is a two-component composition, the composition may be a main agent part or a curing agent part of the two-component composition, or a mixture of the main agent part and the curing agent part.

The composition may form a cured body exhibiting latent heat in a predetermined temperature range. The latent heat is usually defined as a heat quantity required for a state change (phase transition) of a substance. However, in this specification, when the cured body exhibits the latent heat, it is not always necessary to cause a state change overall. The latent heat of the cured body in the present application may occur in the state change process of at least a part of the cured body or the component included in the cured body.

In the present application, the matter that the cured body exhibits latent heat means that the cured material exhibits an endothermic peak in a DSC (Differential Scanning Calorimeter) analysis performed in the manner described in "1. Latent heat measurement" section in Examples of this specification. In one example, the process in which the cured body exhibits the latent heat may be substantially an isothermal process. Therefore, the cured body can be applied to a heat-generating product to control the heat while maintaining the temperature of the product uniformly. In addition, the cured body can minimize or prevent the impact of abnormal heating, explosion and/or ignition occurring in one product on other adjacent products.

The lower limit of the latent heat exhibited by the cured body may be, for example, 20 J/g, 22 J/g, 24 J/g, 26 J/g, 28 J/g, 30 J/g, or 32 J/g or so, and the upper limit thereof may also be 50 J/g, 48 J/g, 46 J/g, 44 J/g, 42 J/g, 40 J/g, 38 J/g, 36 J/g, 34 J/g, 32 J/g, 30 J/g, or 28 J/g or so. The latent heat may be within a range of more than or equal to, or more than any one of the above-described lower limits; or within a range of less than or equal to, or less than any one of the above-described upper limits while being more than or equal to, or more than any one of the above-described lower limits.

In one example, a temperature zone (hereinafter, may be referred to as a latent heat zone) in which the cured body exhibits the latent heat may be adjusted. In this specification, the term latent heat zone is a zone between the start temperature of the latent heat zone and the end temperature of the latent heat zone confirmed in the DSC analysis measured in the manner described in "1. Latent heat measurement" section in Examples of this specification. The temperature at the inflection point of the endothermic peak at the left onset of the endothermic peak confirmed in the DSC analysis may be designated as the latent heat zone start temperature, and the temperature at the inflection point of the endothermic peak at the right onset point may be designated as the latent heat zone end temperature. In the DSC analysis, one or two or more endothermic peaks may be confirmed, and even when two or more endothermic peaks are confirmed, the temperature of the inflection point (left onset) of the endothermic peak at the point where the first endothermic peak starts may be designated as the latent heat zone start temperature, and the temperature of the inflection point (right onset) of the endothermic peak at the point where the last endothermic peak ends may be designated as the latent heat zone end temperature.

The lower limit of the latent heat zone start temperature of the cured body disclosed in this specification may be 20°C, 24°C, 26°C, 27°C, 28°C, 30°C, 32°C, 34°C, 36°C, 38°C, or 40°C or so, and the upper limit thereof may be 60°C, 58°C, 56°C, 54°C, 52°C, 50°C, 48°C, 46°C, 44°C, 42°C, 41°C, or 40°C or so. The latent heat zone start temperature may be within a range of less than or equal to, or less than any one of the above-described upper limits while being more than or

equal to, or more than any one of the above-described lower limits.

The lower limit of the latent heat zone end temperature of the cured body disclosed in this specification may be 30°C, 32°C, 34°C, 36°C, 38°C, 40°C, 42°C, 44°C, 46°C, or 48°C or so, and the upper limit thereof may be 100°C, 95°C, 90°C, 85°C, 80°C, 75°C, 70°C, 65°C, 60°C, 55°C, 50°C, or 48°C or so. The latent heat zone end temperature may be within a range of less than or equal to, or less than any one of the above-described upper limits while being more than or equal to, or more than any one of the above-described lower limits.

The cured body may have a width of the latent heat zone within a certain range. The width of the latent heat zone is a value obtained by subtracting the latent heat zone start temperature from the latent heat zone end temperature. The lower limit of the width of the latent heat zone may be 1°C, 3°C, 5°C, 6°C, 7°C, 8°C, 9°C, 10°C, 15°C, 20°C, 25°C, 30°C, or 35°C or so, and the upper limit thereof may be 60°C, 55°C, 50°C, 45°C, 40°C, 35°C, 30°C, 25°C, 20°C, 15°C, or 10°C or so. The width of the latent heat zone may be within a range of more than or equal to, or more than any one of the above-described lower limits; or within a range of less than or equal to, or less than any one of the above-described upper limits while being more than or equal to, or more than any one of the above-described lower limits.

The cured body exhibiting the latent heat characteristics is applied to various heat-generating products, so that the relevant products enable to operate in a stable and uniform temperature range. Also, the cured body is applied to a product including a plurality of heating elements disposed relatively adjacent to each other, so that the overall temperature of the product can be maintained uniformly. In addition, the cured body can minimize or prevent the effects of abnormal heat generation, ignition, and/or explosion occurring in one element of the product on other elements. In particular, the cured body exhibiting the latent heat characteristics can be applied to products whose driving temperature must be maintained within the range of approximately 15°C to 60°C (e.g., secondary battery cells, or battery modules or battery packs comprising a plurality of the cells) to efficiently control heat.

The cured body can stably maintain the latent heat characteristics for a long period of time. Also, the latent heat characteristics of the cured body can be maintained even when the cured body is exposed to repeated cycles of heating and cooling, and the like. The composition may comprise a so-called phase change material (PCM) (hereinafter, may be referred to as PCM), in order that the cured body exhibits the latent heat characteristics. As the PCM, a material that absorbs heat while being subjected to phase transition from a solid to a liquid may be used. Once such a PCM is exposed to heat, it may be transferred to a liquid phase, and accordingly, lost from the cured body. Therefore, in this case, if the cured body exhibits latent heat once and then is exposed to heat again, the latent heat may decrease or disappear, and if it is exposed to repeated heating and cooling, the latent heat characteristics may ultimately be lost. In the present application, even after the PCM is transferred to the liquid phase, it is not lost in the cured body through selection of the curable resin component forming the cured body, adjustment of the degree of crosslinking, adjustment of the type and ratio of the PCM and/or adjustment of the method for preparing the composition, and can be maintained. Therefore, the latent heat characteristics of the cured body can be stably maintained for a long period of time, and the latent heat characteristics can be maintained even when the cured body is exposed to repeated heating and cooling. In particular, the above effect can be maximized through the application of characteristic fillers to be described below.

For example, the cured body may exhibit a weight change rate of less than or equal to, or less than a certain level under maintenance conditions of 80°C for 24 hours. The weight change rate ($\Delta W$) is evaluated according to Equation 1 below, which is confirmed by the method in "9. Leakage evaluation" of Example section.

[Equation 1]

$$\Delta W = 100 \times (Wf - Wi)/Wi$$

In Equation 1, $\Delta W$ is the weight change rate (unit %), Wf is the weight of the cured body after the cured body is maintained at 80°C for 24 hours, and Wi is the weight of the cured body before it is maintained at 80°C for 24 hours.

The units of weights (Wf and Wi) in Equation 1 are not limited as long as the same units are applied to each other.

The upper limit of the weight change rate ($\Delta W$) may be 10%, 9%, 8%, 7%, 6%, 5%, 4%, 3%, 2%, 1%, 0.9%, 0.8%, 0.7%, 0.6%, or 0.5% or so, and the lower limit thereof may be 0%, 0.1%, 0.2%, 0.3%, 0.4%, 0.5%, 0.6%, or 0.7% or so. The weight change rate may be within a range of less than or equal to, or less than any one of the above-described upper limits; or within a range of less than or equal to, or less than any one of the above-described upper limits while being more than or equal to, or more than any one of the above-described lower limits.

The above weight change rate can be achieved even when the cured body comprises a non-encapsulated PCM. As described above, the PCM can absorb heat to become a liquid phase, thereby being lost, so that in some cases, the PCM is encapsulated and used to solve such a problem. When the PCM is properly encapsulated, the PCM becomes a liquid phase, and it is possible to prevent leakage of the liquid PCM by the capsule. However, because the efficiency of heat transfer to the PCM is reduced by encapsulation, the desired latent heat characteristics are not secured, or excessive amounts of PCM must be used to secure the latent heat characteristics, where the use of excessive amounts of PCM can

cause another problem (for example, difficulty in controlling viscosity, deterioration of injection properties, etc.). However, according to the method disclosed herein, even non-encapsulated PCM can be stably maintained in the cured body.

For example, the upper limit of the ratio of the encapsulated PCM based on the total weight of the PCM included in the composition or cured body may be 10 wt%, 9 wt%, 8 wt%, 7 wt%, 6 wt%, 5 wt%, 4 wt%, 3 wt%, 2 wt%, 1 wt%, 0.5 wt%, 0.1 wt%, 0.05 wt%, or 0.01 wt% or so, and the lower limit thereof may be 0 wt% or so. The ratio may be within a range of less than or equal to, or less than any one of the above-described upper limits; or within a range of less than or equal to, or less than any one of the above-described upper limits while being more than or equal to, or more than any one of the above-described lower limits.

The latent heat characteristics or weight change rate of the cured body can also be achieved without applying so-called composite materials as the PCM. Although the PCM exhibits endothermic properties, it typically has a low thermal conductivity. Therefore, it is not easy to transfer the heat to be treated to the PCM. To this end, a composite material in which a material having a high thermal conductivity, such as graphite or carbon fiber, and the PCM are complexed is known. Such a material can solve the problem of low thermal conductivity, which is a disadvantage of the PCM, to some extent, but is disadvantageous in terms of weight reduction because it increases the density or specific gravity of the material. In the present application, the problem of lowering thermal control efficiency due to the low thermal conductivity can be solved through selection of the curable resin component forming the cured body, adjustment of the degree of crosslinking, adjustment of the type and ratio of the PCM, control of the filler and/or adjustment of the method for preparing the composition without using the complexed PCM, and accordingly, it is possible to provide a lightweight material.

The composition may comprise a resin component. The category of the term resin component includes components that can form the resin through a curing reaction or the like as well as components that they themselves are recognized as resins in the industry. The resin component may be a monomeric, oligomeric, or polymeric compound. The resin component may be a curable resin component. The term curable resin component may mean a resin component that can be cured.

The weight average molecular weight (Mw) of the curable resin component may be controlled. The weight average molecular weight may be measured by the method described in "6. GPC (Gel Permeation Chromatograph)" section of Examples. The lower limit of the weight average molecular weight may be 9,000 g/mol, 10,000 g/mol, 15,000 g/mol, 20,000 g/mol, or 25,000 g/mol or so, and the upper limit thereof may be 100,000 g/mol, 90,000 g/mol, It may be around 80,000 g/mol, 70,000 g/mol, 60,000 g/mol, 50,000 g/mol, 40,000 g/mol, or 30,000 g/mol or so. The weight average molecular weight may be within a range of more than or equal to, or more than any one of the above-described lower limits; or within a range of less than or equal to, or less than any one of the above-described upper limits while being more than or equal to, or more than any one of the above-described lower limits. Such a curable resin component can form a network of cured bodies in which the PCM can be stably maintained therein.

As the resin component having the above molecular weight, a curable silicone component can be effectively applied. The type of the curable resin component is not particularly limited, but in terms of effectively securing the desired effect, the curable silicone component can be used as the curable resin component.

When the curable resin component is a curable silicone component, the component is an addition-curable silicone component, which may include (1) a polyorganosiloxane containing two or more alkenyl groups in the molecule, and (2) a polyorganosiloxane containing two or more silicon-bonded hydrogen atoms in the molecule. The compound may form a cured product by addition reaction in the presence of a catalyst such as a platinum catalyst.

The (1) polyorganosiloxane contains at least two alkenyl groups. In this instance, a specific example of the alkenyl group includes a vinyl group, an allyl group, a butenyl group, a pentenyl group, a hexenyl group or a heptenyl group, and the like, and a vinyl group of the foregoing is usually applied, but is not limited thereto. In the (1) polyorganosiloxane, the bonding position of the above-described alkenyl group is not particularly limited. For example, the alkenyl group may be bonded to the end of the molecular chain and/or to the side chain of the molecular chain. In addition, in the (1) polyorganosiloxane, the type of the substituent that may be included in addition to the above-described alkenyl group may include an alkyl group such as a methyl group, an ethyl group, a propyl group, a butyl group, a pentyl group, a hexyl group, or a heptyl group; an aryl group such as a phenyl group, a tolyl group, a xylyl group, or a naphthyl group; an aralkyl group such as a benzyl group or a phenethyl group; and a halogen-substituted alkyl group such as a chloromethyl group, a 3-chloropropyl group, or a 3,3,3-trifluoropropyl group, and the like, and a methyl group or a phenyl group of the foregoing is usually applied, but is not limited thereto.

The molecular structure of the (1) polyorganosiloxane is not particularly limited, which may also have, for example, any shape, such as a linear, branched, cyclic, network, or partially branched linear structure. In general, one having a linear molecular structure of such molecular structures is usually applied, but is not limited thereto.

A more specific example of the polyorganosiloxane (1) may include a dimethylsiloxane-methylvinylsiloxane copolymer blocked with trimethylsiloxane groups at both ends of the molecular chain, methylvinylpolysiloxane blocked with trimethylsiloxane groups at both ends of the molecular chain, a dimethylsiloxane-methylvinylsiloxane-methylphenylsiloxane copolymer blocked with trimethylsiloxane groups at both ends of the molecular chain, dimethylpolysiloxane blocked with dimethylvinylsiloxane groups at both ends of the molecular chain, methylvinylpolysiloxane blocked with

dimethylvinylsiloxane groups at both ends of the molecular chain, a dimethylsiloxane-methylvinylsiloxane copolymer blocked with dimethylvinylsiloxane groups at both ends of the molecular chain, a dimethylsiloxane-methylvinylsiloxane-methylphenylsiloxane copolymer blocked with dimethylvinylsiloxane groups at both ends of the molecular chain, a polyorganosiloxane copolymer comprising a siloxane unit represented by $R^1{}_2SiO_{2/2}$ and a siloxane unit represented by $R^1{}_2R^2SiO_{1/2}$ and a siloxane unit represented by $SiO_{4/2}$, a polyorganosiloxane copolymer comprising a siloxane unit represented by $R^1{}_2R^2SiO_{1/2}$ and a siloxane unit represented by $SiO_{4/2}$, a polyorganosiloxane copolymer comprising a siloxane unit represented by $R^1R^2SiO_{2/2}$ and a siloxane unit represented by $R^1SiO_{3/2}$ or a siloxane unit represented by $R^2SiO_{3/2}$, and a mixture of two or more of the foregoing, but is not limited thereto. The $R^1$ is a hydrocarbon group other than the alkenyl group, which may be, specifically, an alkyl group such as a methyl group, an ethyl group, a propyl group, a butyl group, a pentyl group, a hexyl group, or a heptyl group; an aryl group such as a phenyl group, a tolyl group, a xylyl group, or a naphthyl group; an aralkyl group such as a benzyl group or a phenethyl group; a halogen-substituted alkyl group such as a chloromethyl group, a 3-chloropropyl group, or a 3,3,3-trifluoropropyl group, and the like. In addition, here, $R^2$ is an alkenyl group, which may be, specifically, a vinyl group, an allyl group, a butenyl group, a pentenyl group, a hexenyl group, or a heptenyl group, and the like.

In the addition-curable silicone composition, (2) polyorganosiloxane may serve to crosslink the (1) polyorganosiloxane. In the (2) polyorganosiloxane, the bonding position of the hydrogen atom is not particularly limited, and for example, it may be bonded to the terminal and/or side chain of the molecular chain. In addition, in the (2) polyorganosiloxane, the type of the substituent that may be included other than the silicon-bonded hydrogen atoms is not particularly limited, which may include, for example, an alkyl group, an aryl group, an aralkyl group or a halogen-substituted alkyl group, and the like, as mentioned in (1) polyorganosiloxane, and a methyl group or a phenyl group of the foregoing is usually applied, but is not limited thereto.

The molecular structure of the (2) polyorganosiloxane is not particularly limited, which may also have, for example, any shape, such as a linear, branched, cyclic, network, or partially branched linear structure. In general, one having a linear molecular structure of such molecular structures is usually applied, but is not limited thereto.

A more specific example of the (2) polyorganosiloxane may include methylhydrogenpolysiloxane blocked with trimethylsiloxane groups at both ends of the molecular chain, a dimethylsiloxane-methylhydrogen copolymer blocked with trimethylsiloxane groups at both ends of the molecular chain, a dimethylsiloxane-methylhydrogensiloxane-methylphenylsiloxane copolymer blocked with trimethylsiloxane groups at both ends of the molecular chain, dimethylpolysiloxane blocked with dimethylhydrogensiloxane groups at both ends of the molecular chain, a dimethylsiloxane-methylphenylsiloxane copolymer blocked with dimethylhydrogensiloxane groups at both ends of the molecular chain, methylphenylpolysiloxane blocked with dimethylhydrogensiloxane groups at both ends of the molecular chain, a polyorganosiloxane copolymer comprising a siloxane unit represented by $R^1{}_3SiO_{1/2}$, a siloxane unit represented by $R^1{}_2HSiO_{1/2}$ and a siloxane unit represented by $SiO_{4/2}$, a polyorganosiloxane copolymer comprising a siloxane unit represented by $R^1{}_2HSiO_{1/2}$ and a siloxane unit represented by $SiO_{4/2}$, a polyorganosiloxane copolymer comprising a siloxane unit represented by $R^1HSiO_{2/2}$ and a siloxane unit represented by $R^1SiO_{3/2}$ or a siloxane unit represented by $HSiO_{3/2}$ and a mixture of two or more of the foregoing, but is not limited thereto. The $R^1$ is a hydrocarbon group other than the alkenyl group, which may be, specifically, an alkyl group such as a methyl group, an ethyl group, a propyl group, a butyl group, a pentyl group, a hexyl group, or a heptyl group; an aryl group such as a phenyl group, a tolyl group, a xylyl group, or a naphthyl group; an aralkyl group such as a benzyl group or a phenethyl group; a halogen-substituted alkyl group such as a chloromethyl group, a 3-chloropropyl group, or a 3,3,3-trifluoropropyl group, and the like.

The content of the (2) polyorganosiloxane is not particularly limited if it is included to the extent that appropriate curing can be achieved. For example, the (2) polyorganosiloxane may be included in an amount such that 0.5 to 10 silicon-bonded hydrogen atoms are present with respect to one alkenyl group included in the aforementioned (1) polyorganosiloxane. In this range, the curing can sufficiently proceed and the heat resistance can be ensured.

The addition-curable silicone component may further comprise platinum or a platinum compound as the catalyst for curing. A specific type of such platinum or platinum compound is not particularly limited. The ratio of the catalyst may also be adjusted to a level at which proper curing can be achieved.

In another example, the curable silicone component is a condensation-curable silicone component, which may comprise, for example, (a) an alkoxy group-containing siloxane polymer; and (b) a hydroxyl group-containing siloxane polymer.

The (a) siloxane polymer may be, for example, a compound represented by the following formula 1.

[Formula 1] $$R^1{}_aR^2{}_bSiO_c(OR^3)_d$$

In Formula 1, $R^1$ and $R^2$ each independently represent a hydrogen atom or a substituted or unsubstituted monovalent hydrocarbon group, $R^3$ represents an alkyl group, where if pluralities of $R^1$, $R^2$ and $R^3$ are each present, they may be the same or different from each other, and a and b each independently represent a number of 0 or more and less than 1, a+b represents a number of more than 0 and less than 2, c represents a number of more than 0 and less than 2, d

represents a number of more than 0 and less than 4, and a+b+c×2+d is 4.

In the definition of Formula 1, the monovalent hydrocarbon group may be, for example, an alkyl group with 1 to 8 carbon atoms, a phenyl group, a benzyl group, or a tolyl group, and the like, where the alkyl group with 1 to 8 carbon atoms may be a methyl group, an ethyl group, a propyl group, an isopropyl group, a butyl group, a pentyl group, a hexyl group, a heptyl group or an octyl group, and the like. In addition, in the definition of Formula 1, the monovalent hydrocarbon group may be substituted with, for example, a known substituent such as halogen, an amino group, a mercapto group, an isocyanate group, a glycidyl group, a glycidoxy group, or a ureido group.

In the definition of Formula 1, an example of the alkyl group in $R^3$ may include a methyl group, an ethyl group, a propyl group, an isopropyl group, or a butyl group, and the like. Among the alkyl groups, a methyl group or an ethyl group, and the like is usually applied, without being limited thereto.

Among the polymers of Formula 1, branched or tertiarily crosslinked siloxane polymers may be used. In addition, in this (a) siloxane polymer, the hydroxyl groups may remain within the range without impairing the purpose, specifically, within the range without inhibiting a dealcoholization reaction.

The (a) siloxane polymer can be produced, for example, by hydrolyzing and condensing polyfunctional alkoxysilane or polyfunctional chlorosilane, and the like. An average person skilled in the art can easily select an appropriate polyfunctional alkoxysilane or chlorosilane according to the desired (a) siloxane polymer, and can also easily control the conditions of the hydrolysis and condensation reaction using the same. Meanwhile, at the time of producing the (a) siloxane polymer, according to the purpose, an appropriate monofunctional alkoxysilane may also be used in combination.

As the (a) siloxane polymer, for example, commercially available organosiloxane polymers such as Shin-Etsu Silicone's X40-9220 or X40-9225, GE Toray Silicones' XR31-B1410, XR31-B0270 or XR31-B2733, and the like may be used.

As the (b) hydroxyl group-containing siloxane polymer included in the condensation-curable silicone composition, for example, a compound represented by the following formula 2 may be used.

[Formula 2]

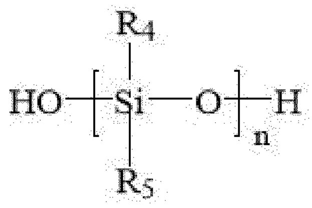

In Formula 2, $R_4$ and $R_5$ each independently represent a hydrogen atom or a substituted or unsubstituted monovalent hydrocarbon group, where if pluralities of $R_4$ and $R_5$ are each present, they may be the same or different from each other, and n represents an integer of 5 to 2,000.

In the definition of Formula 2, a specific type of the monovalent hydrocarbon group may include, for example, the same hydrocarbon group as in the case of Formula 1.

The (b) siloxane polymer can be produced, for example, by hydrolyzing and condensing dialkoxysilane and/or dichlorosilane. An average person skilled in the art can easily select an appropriate dialkoxy silane or dichlorosilane according to the desired (b) siloxane polymer, and can also easily control the conditions of the hydrolysis and condensation reaction using the same. As the (b) siloxane polymer, for example, commercially available bifunctional organosiloxane polymers such as GE Toray Silicones' XC96-723, YF-3800, or YF-3804 may be used.

The above-described addition curing type or condensation curing type silicone composition is one example of the curable silicone component applied in the present application.

The lower limit of the weight ratio of the curable resin component in the composition may be 30 wt%, 35 wt%, 40 wt%, 45 wt%, or 50 wt% or so, and the upper limit thereof may be 80 wt%, 75 wt%, and 70 wt%. %, 65 wt%, 55 wt%, 50 wt%, or 45 wt% or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. The ratio is based on the total weight of the solid content of the composition, and thus, when the composition includes a solvent, it is the ratio based on the total weight of the composition excluding the solvent.

The composition may comprise the PCM (Phase Change Material) to secure the latent heat characteristics. It is possible to exhibit the latent heat characteristics through endotherm and/or exotherm in the phase transition process of the

PCM. The phase transition process of the PCM is an isothermal process.

The phase transition of the PCM may be a phase transition from a solid to a solid, a phase transition from a solid to a liquid, a phase transition from a solid to a gas, or a phase transition from a liquid to a gas. The above-described phase transition may be an endothermic reaction. In terms of efficiency, the PCM having a phase transition from a solid to a liquid is advantageous, but such a PCM becomes a liquid phase after the phase transition, so that it is difficult to be maintained in the cured body. However, the cured body of the present application can exhibit the above-mentioned weight change rate even if the PCM capable of existing in a liquid phase is applied in a non-encapsulated state. Accordingly, the PCM applied in the present application may be a material in which a phase transition occurs between a solid phase and a liquid phase, and may be a material that the phase transition reaction from the solid phase to the liquid phase may be an endothermic reaction.

The PCM may have a melting point within a predetermined range. The lower limit of the melting point of the PCM may be 20°C, 25°C, 30°C, 35°C, 40°C, 45°C, or 50°C or so, and the upper limit thereof may be 100°C, 95°C, 90°C, 85°C, 80°C, 75°C, 70°C, 65°C, 60°C, 55°C, 50°C, or 45°C or so. The melting point may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The lower limit of the latent heat zone start temperature of the PCM may be 5°C, 10°C, 15°C, or 20°C or so, and the upper limit thereof may be 50°C, 45°C, 40°C, 35°C, 30°C, 25°C, or 20°C or so. The latent heat zone start temperature may be within a range of less than or equal to, or less than any one of the above-described upper limits while being more than or equal to, or more than any one of the above-described lower limits.

The lower limit of the latent heat zone end temperature of the PCM may be 30°C, 35°C, 40°C, 45°C, 50°C, 55°C, or 60°C or so, and the upper limit thereof may be 200°C, 150°C, 100°C, 95°C, 90°C, 85°C, 80°C, 75°C, 70°C, 65°C, or 60°C or so. The latent heat zone end temperature may be within a range of less than or equal to, or less than any one of the above-described upper limits while being more than or equal to, or more than any one of the above-described lower limits.

The lower limit of the width of the latent heat zone of the PCM (value obtained by subtracting latent heat zone start temperature from latent heat zone end temperature) may be 10°C, 15°C, 20°C, 25°C, 30°C, 35°C, 40°C, 45°C, or 50°C or so, and the upper limit thereof may also be 100°C, 95°C, 90°C, 85°C, 80°C, 75°C, 70°C, 65°C, 60°C, 55°C, 50°C, or 45°C or so. The width of the latent heat zone may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The lower limit of the latent heat indicated by the PCM may be 50 J/g, 60 J/g, 70 J/g, 80 J/g, 90 J/g, 100 J/g, 110 J/g, 120 J/g, 130 J/g, 140 J/g, 150 J/g, 160 J/g, 170 J/g, or 180 J/g or so, and the upper limit thereof may be 400 J/g, 380 J/g, 360 J/g, 340 J/g, 320 J/g, 300 J/g, 280 J/g, 260 J/g, 240 J/g, 220 J/g, 200 J/g, 190 J/g, or 180 J/g or so. The latent heat may be within a range of more than or equal to, or more than any one of the above-described lower limits; or within a range of less than or equal to, or less than any one of the above-described upper limits while being more than or equal to, or more than any one of the above-described lower limits.

Through application of the PCM, a desired cured body may be formed.

As the PCM, a known PCM may be applied if it exhibits the above-described characteristics. As the PCM, inorganic materials, organic materials, or eutectic materials are known. Among these materials, as the material having the above-described latent heat characteristics, an organic PCM may be used.

As the organic PCM, a fatty acid, an alcohol (polyalcohol), a ketone, D-lactic acid, or a paraffin-based material is known, and in the present application, one, or a mixture of two or more of the materials may be used.

The fatty acid may be exemplified by formic acid, n-octanoic acid, lauric acid, palmitic acid, stearic acid, and the like; the alcohol-based PCM may be exemplified by glycerin, polyethylene glycol (PEG), xylitol, or erythritol, and the like; and the ketone-based PCM may be exemplified by 2-pentadecanone or 4-heptadecanone, and the like.

As the PCM, a paraffin-based material may be used. As the paraffin-based PCM, n-heptadecane, n-octadecane, n-nonadecane, n-Eicosane, n-henicosane, n-docosane, n-tricosane, n-pentacosane, n-hexacosane, n-heptacosane, n-octacosane, n-nonacosane, n-triacontane, n-hentriacontane, n-dotriacontane, n-triatriacontane, or other higher paraffins (Paraffin $C_{16}$~$C_{18}$, Paraffin $C_{13}$~$C_{24}$, RT 35 HC, Paraffin $C_{16}$~$C_{28}$, Paraffin $C_{20}$-$C_{33}$, Paraffin $C_{22}$-$C_{45}$, Paraffin $C_{22}$~$C_{50}$, Paraffin natural wax 811, Paraffin natural wax 106, etc.) are known.

An appropriate type may be selected and used among the known paraffin-based PCMs.

As the PCM, a paraffin having a melting point in the above-mentioned range and a certain carbon number may be used. The lower limit of the carbon number of the paraffin may be 5, 10, or 15 or so, and the upper limit thereof may be 60, 55, 50, 45, 40, 35, or 30 or so. The carbon number of the paraffin may be within a range of less than or equal to, or less than any one of the above-described upper limits while being more than or equal to, or more than any one of the above-described lower limits. Such a paraffin may be an alkane having the above carbon number.

The lower limit of the weight ratio of the PCM relative to 100 parts by weight of the curable resin component in the

composition may be 10 parts by weight, 12 parts by weight, 14 parts by weight, 16 parts by weight, 18 parts by weight, 20 parts by weight, 22 parts by weight, 24 parts by weight, 26 parts by weight, 28 parts by weight, 30 parts by weight, 32 parts by weight, or 34 parts by weight or so, and the upper limit thereof may be 60 parts by weight, 58 parts by weight, 56 parts by weight, 54 parts by weight, 52 parts by weight, 50 parts by weight, 48 parts by weight, 46 parts by weight, 44 parts by weight, 42 parts by weight, 40 parts by weight, 38 parts by weight, 36 parts by weight, 34 parts by weight, 32 parts by weight, 30 parts by weight, 28 parts by weight, or 26 parts by weight or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits. In general, as the content of PCM increases, the latent heat characteristics can also increase, but too much PCM can cause the leakage problem and reduce the heat control efficiency of heat-generating products. Therefore, the upper limit of the appropriate PCM content can be adjusted considering the application use.

The composition may comprise a filler as an additional component.

Such a filler can prevent the leakage of the PCM, thereby serving to ensure that the weight change rate can be achieved. Although the reason is not clear, it is expected that the fillers having a particle size distribution to be described below form a structure (for example, a packing or network structure) capable of maintaining the PCM within the composition or cured body.

As the filler, a known filler can be applied without special limitation if it has a particle size distribution to be described below. To impart additional functions, a filler having flame retardancy (flame retardant particles) and/or a filler having thermal conductivity (thermal conductive particles) may be used as the filler. If the filler has flame retardancy, it is possible to impart additional flame retardancy to the cured body. In addition, the thermally conductive filler can allow heat to be processed to be transferred to the PCM more efficiently.

The filler may be exemplified by, for example, one or more fillers selected from the group consisting of aluminum hydroxide ($Al(OH)_3$), magnesium hydroxide ($Mg(OH)_2$), calcium hydroxide ($Ca(OH)_2$), boehmite (AlOOH), hydromagnesite, magnesia, alumina, aluminum nitride (AlN), boron nitride (BN), silicon nitride ($Si_3N_4$), silicon carbide (SiC), zinc oxide (ZnO) and beryllium oxide (BeO), but is not limited thereto. One or two or more may be selected from the above fillers. When a low-density cured body is to be formed, a filler having a small specific gravity (e.g., aluminum hydroxide or magnesium hydroxide, etc.) may be selected among the filler components.

The shape of the filler is not particularly limited, and, for example, spherical, needle-shaped, plate-shaped, or other amorphous fillers may be used.

The filler may have a particle size distribution in which D10, D50, and/or D90 particle diameters are adjusted. The particle diameter is measured by the method described in "2. Measurement of average particle diameter of filler" section in Example sections of this specification. In the volume-based particle size distribution chart obtained according to the above section, the particle diameter at the point where the cumulative volume is 10% is designated as the D10 particle diameter, the particle diameter at the point where the cumulative volume is 50% is designated as the D50 particle diameter, and the particle diameter at the point where the cumulative volume is 90% is designated as the D90 particle diameter.

The lower limit of the D50 particle diameter of the filler may be 10 μm, 15 μm, 20 μm, 25 μm, 30 μm, 35 μm, 40 μm, 45 μm, or 50 μm or so, and the upper limit thereof may be 200 μm, 180 μm, 160 μm, 140 μm, 120 μm, 100 μm, 80 μm, 60 μm, or 50 μm or so. The D50 particle diameter may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

In the particle size distribution of the filler, the ratio of the D50 particle diameter of the filler relative to the D10 particle diameter (A = D50 particle diameter/D10 particle diameter) may be greater than the ratio of the D90 particle diameter of the filler relative to the D50 particle diameter (B = D90 particle diameter/D50 particle diameter) (A>B).

For example, the lower limit of the ratio of the D50 particle diameter to the D10 particle diameter (A = D50 particle diameter/D10 particle diameter) may be 1.5, 2, 2.5, 3, 3.5, 4, 4.5, 5, 5.5 6, 6.5, 7, 7.5, 8, 8.5, 9, 9.5, or 10 or so, and the upper limit thereof may be 30, 28, 26, 24, 22, 20, 18, 16, 14, 12, 11, 10.5, or 10 or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

For example, the upper limit of the ratio of the D90 particle diameter of the filler relative to the D50 particle diameter (B = D90 particle diameter/D50 particle diameter) may be 7, 6.5, 6, 5.5, 5, 4.5, 4, 3.5, 3, 2.5, or 2 or so, and the lower limit thereof may be 1, 1.2, 1.4, 1.6, or 1.8 or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

For example, the upper limit of the ratio of the D90 particle diameter of the filler relative to the D10 particle

diameter (C = D90 particle diameter/D10 particle diameter) may be 50, 45, 40, 35, 30, 25, or 20 or so, and the lower limit thereof may be 5, 10, 15, 16, 17, or 18 or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The ratio (C/B) between the ratio C (=D90 particle diameter/D10 particle diameter) and the ratio B (=D90 particle diameter/D50 particle diameter) can also be adjusted. The lower limit of the ratio (C/B) may be 1, 2, 3, 4, 5, 6, 7, 8, 9, 9.5, or 10 or so, and the upper limit thereof may be 30, 28, 26, 24, 22, 20, 18, 16, 14, 12, 11, 10.5, or 10 or so. The ratio (C/B) may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The ratio (A/B) between the ratio A (=D50 particle diameter/D10 particle diameter) and the ratio B (=D90 particle diameter/D50 particle diameter) can also be adjusted. The lower limit of the ratio (A/B) may be 0.5, 1, 1.5, 2, 2.5, 3, 3.5, 4, 4.5, 5, or 5.5 or so, and the upper limit thereof may be 20, 18, 16, 14, 12, 10, 8, or 6 or so. The ratio (A/B) may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The ratio (C/A) between the ratio A (=D50 particle diameter/D10 particle diameter) and the ratio C (=D90 particle diameter/D10 particle diameter) can also be adjusted. The lower limit of the ratio (C/A) may be 0.01, 0.05, 0.1, 0.5, 1, or 1.5 or so, and the upper limit thereof may be 10, 9, 8, 7, 6, 5, 4, 3, or 2 or so. The ratio (C/A) may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

Under the above particle size distribution, it is possible to appropriately prevent the leakage of the PCM and the like, and it is possible to secure the desired function.

In one example, the filler may be included such that the ratio (P/F) of the weight (F) of the filler and the weight (P) of the PCM is within a predetermined range. For example, the upper limit of the ratio P/F may be 0.45, 0.44, 0.43, 0.42, 0.41, 0.40, 0.39, 0.38, 0.37, 0.36, or 0.35 or so, and the lower limit thereof may be 0.1, 0.15, 0.2, 0.25, 0.3, 0.31, 0.32, 0.33, 0.34, 0.35, 0.36, 0.37, 0.38, 0.39, or 0.4 or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

In the composition, the upper limit of the ratio of the filler relative to 100 parts by weight of the curable resin component may be 300 parts by weight, 280 parts by weight, 260 parts by weight, 240 parts by weight, 220 parts by weight, 200 parts by weight, 180 parts by weight, 160 parts by weight, 140 parts by weight, 100 parts by weight, 95 parts by weight, 90 parts by weight, 85 parts by weight, 80 parts by weight, or 75 parts by weight or so, and the lower limit thereof may also be 30 parts by weight, 35 parts by weight, 40 parts by weight, 45 parts by weight, 50 parts by weight, 55 parts by weight, 65 parts by weight, 70 parts by weight, 75 parts by weight, 80 parts by weight, 85 parts by weight, 90 parts by weight, 95 parts by weight, or 100 parts by weight or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

In the composition, the upper limit of the ratio of the filler relative to 100 parts by weight of the PCM may be 1,000 parts by weight, 950 parts by weight, 900 parts by weight, 850 parts by weight, 800 parts by weight, 750 parts by weight, 700 parts by weight, 650 parts by weight, 600 parts by weight, 550 parts by weight, 500 parts by weight, 450 parts by weight, 400 parts by weight, 350 parts by weight, 300 parts by weight, 280 parts by weight, or 260 parts by weight or so, and the lower limit thereof may be 50 parts by weight, 100 parts by weight, 150 parts by weight, 200 parts by weight, 250 parts by weight, 260 parts by weight, 270 parts by weight, 275 parts by weight, or 280 parts by weight or so. The ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The composition may comprise other necessary components in addition to the above components. For example, the composition may further comprise additional additives, for example, a catalyst, a hollow filler, a pigment or dye, a dispersant, a thixotropy imparting agent, and/or a flame retardant, and the like, if necessary, in addition to the above components.

Such a composition may be a solvent-based composition, an aqueous composition, or a solventless composition, and may suitably be a solventless composition.

The term solventless composition refers to a composition that substantially does not contain a solvent. For example, the upper limit of the ratio of solvent contained in the composition may be 10 wt%, 9 wt%, 8 wt%, 7 wt%, 6 wt%, 5 wt%, 4 wt%, 3 wt%, 2 wt%, 1 wt%, 0.5 wt%, 0.1 wt%, 0.05 wt%, or 0.01 wt% or so, and the lower limit thereof may be 0 wt% or so. The ratio may be within a range of less than or equal to, or less than any one of the above-described upper limits; or within a range of less than or equal to, or less than any one of the above-described upper limits while being more than or equal to, or more than any one of the above-described lower limits.

As described above, the curable composition may be a one-component composition or a two-component composition, and in some cases, it may be a main agent or curing agent part of the two-component composition, or a mixture of the main agent and curing agent parts.

When the composition is a two-component composition, the ratios of other components in the main agent and curing agent parts other than the curable resin component are not particularly limited. For example, the PCM and/or the filler may be included in both the main agent and curing agent parts, or may be included in the main agent and curing agent parts separately.

The composition is suitably used for various applications, and particularly, it is applied to a heating product, whereby it can be used as a material for controlling heat of the product.

In one example, to satisfy the latent heat characteristics and weight change rate, and the like as described above, a method for preparing the composition may be selected.

For example, the composition may be prepared by mixing the PCM, and the curable resin component and the filler in a state in which the PCM is melted. Through this step, the desired composition can be more effectively provided.

The method for preparing the composition may comprise a step of mixing a PCM in a molten state with a curable resin component and a filler. For example, the preparing method may comprise a first step of melting a PCM and a second step of mixing the melted PCM with a curable resin component and a filler.

The method of melting the PCM is not particularly limited, and for example, the PCM can be maintained at a temperature above the melting point of the PCM to be melted. In one example, the lower limit of the difference (T-Tm) between the holding temperature (T) of the PCM and the melting point (Tm) of the PCM may be 10°C, 15°C, 20°C, 25°C, or 30°C or so, and the upper limit thereof may be 100°C, 95°C, 90°C, 85°C, 80°C, 75°C, 70°C, 65°C, 60°C, 55°C, 50°C, 45°C, 40°C, 35°C, or 30°C or so. The difference (T-Tm) may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

By mixing the PCM melted in this temperature range with the curable resin component and the filler to prepare the composition, it is possible to efficiently prepare the composition having the desired properties. The temperature at the time of mixing the melted PCM and the curable resin component may be a temperature within the same range as the temperature at which the PCM is melted, or a temperature lower than the temperature.

In one example, the lower limit of the difference (Tx-Tm) between the mixing temperature (Tx) and the melting point (Tm) of the PCM may be 10°C, 15°C, 20°C, 25°C, or 30°C or so, and the upper limit thereof may be 100°C, 95°C, 90°C, 85°C, 80°C, 75°C, 70°C, 65°C, 60°C, 55°C, 50°C, 45°C, 40°C, 35°C, or 30°C or so. The difference (Tx-Tm) may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

This specification discloses a cured body of the composition. A method for curing the composition to obtain a cured body is not limited, and an appropriate curing method is applied according to the type of the composition. For example, a method of irradiating the composition with energy beams such as ultraviolet rays in the case of the energy beam curing type, a method of maintaining the composition under appropriate moisture in the case of the moisture curing type, a method of applying appropriate heat to the composition in the case of the thermal curing type, a method of maintaining the composition at room temperature in the case of the room temperature curing type, a method of applying two or more curing methods in the case of the hybrid curing type, and the like may be used. As described above, in a suitable example, the composition may be of the room temperature curing type.

This specification also discloses a product (heat-generating product) comprising the composition or the cured body thereof. The composition or the cured body thereof may be usefully applied as a material for controlling heat of a heat-producing component, a heating element, or a heating product. Therefore, the article may comprise a heat-producing component or a heating element or a heating product. The heat-producing component, element or product means a component, element or product that generates heat during use, and the type thereof is not particularly limited. Representative heat-producing components, elements, or products include various electric/electronic products comprising battery cells, battery modules, or battery packs, and the like.

The article of the present application may comprise, for example, the heat-producing component, element, or

product, and the composition (or two-component composition) or the cured body thereof existing adjacent to the heat-producing component and the like. In this case, as described above, the heat-producing component, element or product may be a component, element or product having an appropriate driving temperature in the range of approximately 15°C to 60°C. That is, the composition of the present application is useful for being disposed adjacent to the heat-producing component, element, or product to uniformly maintain the driving temperature of the product within the above range.

The specific method of constituting the article is not particularly limited, and if the composition or the two-component composition of the present application or the cured body thereof is applied as a heat dissipation material, the article may be configured in various known methods.

In one example, the composition may be used as a potting material upon constructing a battery module or battery pack. The potting material may be a material covering at least a part of or all a plurality of unit battery cells in a battery module or a battery pack while being in contact with the same. When the composition of the present application or the cured body thereof has been applied as the potting material, it can control heat generated in the battery cells of the battery module or pack, can prevent chain ignition or explosion, and the like, and can uniformly maintain the driving temperature of the module, pack, or battery cells. The present application can also provide a composition that has excellent potting efficiency because viscosity or thixotropy is controlled to an appropriate level before curing, and forms a stable potting structure without generating unnecessary bubbles after curing. The present application can provide a composition capable of providing a battery module or pack having high power while being lightweight compared to the volume by showing a low density after curing. The present application can also provide a composition having excellent required physical properties including insulation and the like.

In this case, regarding a battery-related technology, the composition may be applied as a heat dissipation material of a battery module or a battery pack, and the like, or a heat dissipation material of an OBC (on-board charger) for a vehicle. Therefore, the present application may also relate to a battery module, battery pack, or on-board charger (OBC) comprising the composition or the cured body thereof as the heat dissipation material. In the battery module, battery pack, or on-board charger, the application position or application method of the composition or the cured body is not particularly limited, and a known method may be applied. In addition, the composition of the present application is not limited to the above use, which can be effectively applied to various uses requiring excellent heat dissipation properties, storage stability and adhesion force.

In another example related to the present application, the present application may relate to an electronic apparatus or device having the cured body of the composition.

The type of electronic apparatus or device is not particularly limited, which may be exemplified by, for example, an AVN (audio video navigation) for a vehicle, or an OBC (on-board charger) module for an electric vehicle, an LED module or IC chip, and a computer or mobile device comprising the same.

The cured body of the composition may radiate heat within the apparatus or device, and may impart durability against impact, insulation, and the like.

In one example, the composition may be used as a battery potting material.

The present application also relates to a battery module to which the potting material is applied. Such a battery module can exhibit high power while being lightweight compared to the same volume, where the heat generated from the battery cells, and the like is appropriately controlled, and problems such as chain ignition do not occur.

The battery module may comprise a plurality of battery cells; and the composition or the cured product thereof covering at least a part of or all the plurality of battery cells. In one example, the battery module may further comprise a module case or a substrate, and the battery cells may be disposed inside the module case or on the substrate.

In one example, the composition or its cured product (potting material) may cover the battery cells while being in contact with the whole surface of the plurality of battery cells (except for the surface of the battery cells in contact with the substrate side) (structure of Figure 1), or may be in contact only with upper portions of the plurality of battery cells (structure of Figure 2).

Figures 1 and 2 are schematic diagrams of such battery module structures, and are views showing structures comprising a substrate (10); battery cells (20) and the potting material (30, the composition or the cured product thereof). The battery module may further comprise an adhesive material (40) for fixing the battery cells (20) to the substrate (10), and in one example, the adhesive material (40) may be configured to have thermal conductivity.

If the composition or its cured product is applied as a potting material, the specific configuration of the battery module, for example, the types of the battery cell, the substrate, and/or the adhesive material are not particularly limited, and known materials may be applied.

For example, known cylindrical battery cells may be applied as the battery cells, and a known material may also be applied as the substrate or adhesive material.

The manufacturing method of the battery module is not particularly limited, and for example, it may be formed through steps of pouring the composition onto the upper portions of a plurality of battery cells formed on a substrate, and curing it if necessary.

[Effects of Invention]

The present application provides a composition, and in one example, the composition can be used as a potting material upon constructing a battery module or battery pack. The potting material may be a material covering at least a part of or all a plurality of unit battery cells in a battery module or a battery pack while being in contact with the same. The present application can provide a composition having excellent thermal insulation and heat-shielding properties, and exhibiting resistance to flame, so that when it has been applied as the potting material, it is possible to control heat generated from the battery cells of the battery module or pack, and it is possible to prevent chain ignition. The present application can also provide a composition that has excellent potting efficiency because viscosity or thixotropy is controlled to an appropriate level before curing, and forms a stable potting structure without generating unnecessary bubbles after curing. The present application can provide a composition capable of providing a battery module or pack having high power while being lightweight compared to the volume by showing a low density after curing. The present application can also provide a composition having excellent required physical properties including insulation and the like.

[Brief Description of Drawings]

Figures 1 and 2 are schematic diagrams of exemplary battery modules of the present application.

Figure 3 is a diagram showing arrangement of battery cells in a module applied to chain ignition and rapid charge-discharge tests.

[Mode for Invention]

Hereinafter, the present application will be described in detail through examples and comparative examples, but the scope of the present application is not limited by the following examples.

**1. Latent heat measurement**

Latent heat was evaluated in the following manner. The main agent part and the curing agent part of each two-component composition of Examples or Comparative Examples were placed in a two-component cartridge and maintained in a chamber at 50°C for 1 hour or so. Thereafter, the composition was applied to an aluminum dish to a thickness of about 10 mm or so using a two-component injector and cured by maintaining it at room temperature (about 25°C) for 24 hours or so. Subsequently, 3 mg of the cured body was collected as a sample and the latent heat was evaluated using DSC (Differential Scanning Calorimeter) equipment (TA instrument, Q200 model). Upon evaluating the latent heat, the temperature zone was set from -20°C to 200°C, the endothermic zone was measured while the temperature was raised at a rate of about 10°C/min, and the latent heat (unit: J/g) was calculated by integrating the endothermic peak. In addition, the temperature at the inflection point of the endothermic peak at the left onset of the endothermic peak was set as the latent heat zone start temperature, and the temperature at the inflection point of the endothermic peak at the right onset point was set as the latent heat zone end temperature.

The latent heat was obtained by integrating the endothermic peak within the zone between the latent heat zone start temperature and the latent heat zone end temperature.

**2. Measurement of average particle diameter of filler**

An average particle diameter of a filler was measured using Marvern's Mastersizer 3000 equipment in accordance with ISO-13320 standard. Upon the measurement, ethanol was used as a solvent. The particle diameter can be obtained by analyzing the intensity and directionality values of the lasers scattered by fillers dispersed in the solvent through Mie theory. Through the above analysis, the volume-based particle size distribution chart was obtained through conversion to the diameter of a sphere with the same volume as the dispersed fillers, and the particle diameter at the point with the cumulative volume of 10% was set as D10 particle diameter, the particle diameter at the point with the cumulative volume of 50% was set as D50 particle diameter, and the particle diameter at the point with the cumulative volume of 90% was set as D90 particle diameter. In this specification, the particle diameter simply referred to as the average particle diameter without special mention is the D50 particle diameter among the above particle diameters.

**3. Chain ignition test**

Cylindrical battery cells of 21700 standard (21mm×70mm) were arranged in a honeycomb arrangement form as in Figure 3. In Figure 3, Nos. 1 to 36 each refer to the cylindrical battery cell. Upon the above arrangement, the gap between battery cells was set to about 1 mm. A temperature measuring device (thermocouple) was attached to battery cells 1 to 8, 14, 27, and 36 in Figure 3 and fixed to a lower jig. Thereafter, each composition prepared in Examples or Comparative Examples was potted to cover all the arranged cylindrical battery cells, and maintained at room temperature (about 25°C) for 24 hours or so to be cured, thereby manufacturing a battery module. Thereafter, in a state where the battery cells 1 to 7 were overcharged, nail penetration was performed on each of the battery cells 1 to 7 to ignite them. The nail penetration is a test in which a battery cell is stabbed with a sharp iron and the iron penetrates the battery cell. In the case where only battery cells 1 to 7 ignited in the nail penetration and the ignition did not spread to other surrounding battery cells, it was evaluated as OK, and if the ignition spread to other battery cells, it was evaluated as NG.

**4. Rapid charge-discharge test**

A test was conducted using a battery module manufactured in the same manner as in the case of the chain ignition test. In the process that the battery cells 1 to 7 in the arrangement of Figure 3 were charged to 100% for 30 minutes, and then discharged for 15 minutes (Conditions: Max Load 87A (3C), cut off 0.582A (0.02C), Voltage cut off: 42V (4.15V~3.0V based on cell)), the maximum temperature of the temperatures measured in the battery cells 1 to 7 was recorded.

**5. Whether the surface is solidified or not**

In the manufacturing process of the battery module applied to the chain ignition test, the composition was potted, and then maintained at room temperature for 5 minutes or so, and flowability was evaluated when the battery module was turned over. When the module was turned over, the case where the composition did not flow was evaluated as OK, and the case where the composition did flow was evaluated as NG.

**6. GPC (Gel Permeation Chromatograph)**

Molecular weight properties of a material were measured using GPC (Gel permeation chromatography). An analysis target material was placed in a 5 mL vial and diluted in toluene to a concentration of about 5 mg/mL or so. Thereafter, the standard sample for calibration and the material to be analyzed were filtered through a syringe filter (pore size: 0.45 μm), and then measured. As an analysis program, Agilent technologies' ChemStation was used, and the elution time of the sample was compared with the calibration curve to obtain each a weight average molecular weight (Mw) or a number average molecular weight (Mn). The measurement conditions of GPC are as follows.

<GPC measurement conditions>

Instrument: Agilent technologies' 1200 series

Columns: using Polymer laboratories' 2 PLgel mixed B

Solvent: toluene

Column temperature: 40°C

Sample concentration: 5 mg/mL, 10 μL injection

Standard sample: polystyrene (Mp: 3900000, 723000, 316500, 52200, 31400, 7200, 3940, 485)

**7. Viscosity evaluation**

A viscosity was measured using a viscosity meter (Brookfield, Brookfield LV Type) and a spindle #63. After adjusting the zero point of the viscosity meter, the spindle is mounted on a spindle connection, a plate is mounted on a plate connection, and then they are adjusted through an adjustment lever to create a certain gap between the spindle and the

plate. The plate is separated therefrom, 0.5 mL or so of a viscosity measurement target is applied to the center of the separated plate, and then the plate is mounted on the plate connection, and after waiting until the torque value becomes 0, the viscosity is measured at about 60°C and a rotation rate of 10 rpm. The viscosity is measured for about 1 minute or more and the stabilized value is adopted.

**8. Liquid injection property evaluation**

137 cylindrical battery cells of 21700 standard (21 mm × 70 mm) are arranged in a honeycomb structure (the gap between battery cells is 1 mm). A simple module is manufactured by fixing each battery cell to a lower plate using an epoxy glue, and covering an upper frame. The curable composition (mixture of main agent and curing agent parts) is injected into the simple module (using a two-component cartridge and a static mixer) and the injection form is observed. When the injection is performed smoothly and an amount equivalent to the volume of the space between the battery cells in the simple module is injected, it is evaluated as OK, and when problems such as curing of the curable composition occur during injection or the volume of the injected curable composition is significantly less than the volume of the space between the battery cells, it is evaluated as NG.

**9. Leakage evaluation**

Leakage was evaluated in the following manner. A mixture was prepared by mixing the main agent part and the curing agent part of the curable composition in a weight ratio of 1:1. The mixture was kept in a chamber at 80°C for 1 hour or so, and then applied to an aluminum dish using an injector to a thickness of about 10 mm or so. The applied mixture was maintained at room temperature (about 25°C) for 24 hours to be cured, thereby manufacturing a cured body. The cured body was cut into a square with horizontal and vertical lengths of 1 cm, respectively, to prepare a specimen (weight: Wi, unit g). The specimen was kept in a chamber at about 80°C for about 24 hours in a state of being placed on a filter paper, and then taken out, whereby the weight of the specimen (weight: Wf, unit g) was measured again. The weight change rate (ΔW) was calculated by substituting the weight measured in the above process into Equation 1 below. The weight change rates were measured for four specimens formed from the same curable composition, respectively, and the average value was taken.

[Equation 1]

$$\Delta W = 100 \times (Wf - Wi)/Wi$$

If the weight change rate was less than 1%, it was evaluated as OK, and if it was 1% or more, it was evaluated as NG.

**Example 1.**

**Preparation of main agent part**

As a curable resin component, a curable silicone component (KCC, SL3000) was used. A main agent component (SL3000A) of the resin component, a PCM (paraffin (Paraffin $C_{16}$ to $C_{28}$, manufactured by Junsei) with a melting point in a range of about 42°C to 44°C), and aluminum hydroxide (KC, DH-50P) were mixed to prepare the main agent part. The weight average molecular weight (Mw) of the main agent component (SL3000A) was about 28,000 g/mol or so, and the PCM showed latent heat of about 180 J/g or so in the temperature range of 20°C to 60°C in a DSC analysis. The aluminum hydroxide had a D10 particle diameter of about 5 μm or so, a D50 particle diameter of about 50 μm or so, and a D90 particle diameter of about 90 μm or so.

Upon the mixing, the main agent component (SL3000A) (A), the PCM (B), and the aluminum hydroxide (C) were mixed in a weight ratio (A: B: C) of about 100:32:80. Upon preparing the main agent part, the PCM was first melted while uniformly stirring (300 rpm) it at a temperature of about 60°C for 1 hour, and other components of the main agent part were mixed into the melted PCM, and further stirred at 500 rpm for 2 hours. The mixing of the PCM and other components of the main agent part was performed at a temperature of about 60°C. Thereafter, the mixture was stirred and deformed in vacuum atmosphere and 50 rpm conditions for 20 minutes to prepare the main agent part.

**Preparation of curing agent part**

A curing agent part was prepared by mixing a curing agent component (SL3000B) of the curable resin component

(manufactured by KCC, SL3000), a PCM, and aluminum hydroxide. The used PCM and aluminum hydroxide were the same as those used in preparing the main agent part. The weight average molecular weight (Mw) of the curing agent (SL3000B) was about 28,000 g/mol or so. Upon the mixing, the curing agent component (SL3000B) (A), the PCM (B), and aluminum hydroxide (C) were mixed in a weight ratio (A: B: C) of about 100:32:80. Upon preparing the curing agent part, the PCM was first uniformly stirred (300 rpm) at a temperature of about 60°C for 1 hour to be melted, and other components of the curing agent part were mixed into the melted PCM, and further stirred at 500 rpm for 2 hours. The mixing of the PCM and other components of the curing agent part was performed at a temperature of about 60°C or so. Thereafter, the mixture was stirred and defoamed in a vacuum atmosphere under a condition of 50 rpm for 20 minutes.

**Composition**

A composition was prepared by preparing the main agent and curing agent parts, respectively. At this time, upon mixing the main agent part and the curing agent part, the main agent component of the main agent part (SL3000A) and the curing agent component of the curing agent part (SL3000B) were prepared to be mixed in a weight ratio of 1:1.

**Example 2.**

A main agent part was prepared in the same manner as in Example 1, except that the mixing ratio of the main agent component (SL3000A) (A), the PCM (B) and aluminum hydroxide (C) was set to a weight ratio (A: B: C) of about 100:25:72. In addition, a curing agent part was prepared in the same manner as in Example 1, except that the curing agent component (SL3000B) (A), the PCM (B), and aluminum hydroxide (C) were mixed in a weight ratio (A: B: C) of about 100:25:72. A composition was prepared in the same manner as in Example 1 using the main agent part and curing agent part.

**Example 3.**

A main agent part was prepared in the same manner as in Example 1, except that the mixing ratio of the main agent component (SL3000A) (A), the PCM (B) and aluminum hydroxide (C) was set to a weight ratio (A: B: C) of about 100:35:100. In addition, a curing agent part was prepared in the same manner as in Example 1, except that the curing agent component (SL3000B) (A), the PCM (B), and aluminum hydroxide (C) were mixed in a weight ratio (A: B: C) of about 100:35:100. A composition was prepared in the same manner as in Example 1 using the main agent part and curing agent part.

**Comparative Example 1.**

**Preparation of main agent part**

As a curable resin component, a curable polyurethane component (Lord's circalok 6410) was used. A main agent component of the resin component, a PCM, and aluminum hydroxide were mixed to prepare the main agent part. The same PCM and aluminum hydroxide as in Example 1 were used. Upon the mixing, the main agent component (A), PCM (B), and aluminum hydroxide (C) were mixed in a weight ratio (A: B: C) of about 100:25:72. Upon preparing the main agent part, the PCM was first melted while uniformly stirring (300 rpm) it at a temperature of about 60°C for 1 hour, and other components of the main agent part were mixed into the melted PCM, and further stirred at 500 rpm for 2 hours. The mixing of the PCM and other components of the main agent part was performed at a temperature of about 60°C. Thereafter, the mixture was stirred and deformed in a vacuum atmosphere under a condition of 50 rpm for 20 minutes to prepare the main agent part.

**Preparation of curing agent part**

A curing agent part was prepared by mixing a curing agent component of the curable polyurethane component (Lord's circalok 6410), a PCM, and aluminum hydroxide (Sigma Aldrich). The used PCM and aluminum hydroxide were the same as those used in preparing the main agent part. Upon the mixing, the curing agent component (A), the PCM (B), and aluminum hydroxide (C) were mixed in a weight ratio (A: B: C) of about 100:25:72. Upon preparing the curing agent part, the PCM was first uniformly stirred (300 rpm) at a temperature of about 60°C for 1 hour to be melted, and other components of the curing agent part were mixed into the melted PCM, and further stirred at 500 rpm for 2 hours. The mixing of the PCM and other components of the curing agent part was performed at a temperature of about 60°C or so. Thereafter, the mixture was stirred and defoamed in a vacuum atmosphere under a condition of 50 rpm for 20 minutes.

**Composition**

A composition was prepared by preparing the main agent and curing agent parts, respectively. At this time, upon mixing the main agent part and the curing agent part, the main agent component of the main agent part and the curing agent component of the curing agent part were prepared to be mixed in a weight ratio of 1:1.

**Comparative Example 2**

A main agent part, a curing agent part, and a composition were prepared in the same manner as in Example 1, except that aluminum hydroxide was not applied upon the preparation of the main agent part and the curing agent part.

**Comparative Example 3**

A main agent part, a curing agent part, and a composition were prepared in the same manner as Example 1, except that the aluminum hydroxide and PCM were not applied upon the preparation of the main agent part and the curing agent part.

**Comparative Example 4.**

A main agent part was prepared in the same manner as in Example 1, except that the mixing ratio of the main agent component (SL3000A) (A), the PCM (B) and aluminum hydroxide (C) was mixed to a weight ratio (A: B: C) of about 100:42:85. In addition, a curing agent part was prepared in the same manner as in Example 1, except that the curing agent component (SL3000B) (A), the PCM (B), and aluminum hydroxide (C) were mixed in a weight ratio (A: B: C) of about 100:42:85. A composition was prepared in the same manner as in Example 1 using the main agent part and curing agent part.

**Comparative Example 5.**

A main agent part was prepared in the same manner as in Example 1, except that the mixing ratio of the main agent component (SL3000A) (A), the PCM (B) and aluminum hydroxide (C) was mixed to a weight ratio (A: B: C) of about 100:18:70. In addition, a curing agent part was prepared in the same manner as in Example 1, except that the curing agent component (SL3000B) (A), the PCM (B), and aluminum hydroxide (C) were mixed in a weight ratio (A: B: C) of about 100:18:70. A composition was prepared in the same manner as in Example 1 using the main agent part and curing agent part.

**Comparative Example 6**

Aluminum hydroxide (KC, SH-15k) having a type different from the aluminum hydroxide (KC, DH-50P) used in Example 1 was used. This aluminum hydroxide (KC, SH-15k) had a D10 particle diameter of about 2 $\mu$m or so, a D50 particle diameter of about 15 $\mu$m or so, and a D90 particle diameter of about 70 $\mu$m or so. A main agent part, a curing agent part, and a composition were prepared in the same manner as in Example 1, except for using the aluminum hydroxide.

The evaluation results for the compositions of Examples and Comparative Examples were summarized and described in Tables 1 and 2 below. In Tables 1 and 2 below, the rapid charge-discharge test temperature was recorded as the maximum temperature among the temperatures measured in the battery cells 1 to 7 in 4. rapid charge-discharge test process above. In addition, the viscosity in Tables 1 and 2 below is the viscosity measured immediately after mixing the main agent and curing agent parts of the curable composition in a weight ratio of 1:1.

[Table 1]

| | Example | | |
|---|---|---|---|
| | 1 | 2 | 3 |
| Liquid injection property | OK | OK | OK |
| Viscosity (cP) | 460 | 620 | 890 |
| Latent heat (J/g) | 33.2 | 26.8 | 31.5 |
| Latent heat zone start temperature (°C) | 39.8 | 40.6 | 40.6 |
| Latent heat zone end temperature (°C) | 48.4 | 47.7 | 47.6 |

(continued)

| | Example | | |
|---|---|---|---|
| | 1 | 2 | 3 |
| Chain ignition test | OK | OK | OK |
| Rapid charge-discharge test temperature (°C) | 75.2 | 76.8 | 74.7 |
| Surface solidification | OK | OK | OK |
| Leakage evaluation | OK | OK | OK |
| Weight change rate (%) | 0.7 | 0.4 | 0.6 |

[Table 2]

| | Comparative Example | | | | | |
|---|---|---|---|---|---|---|
| | 1 | 2 | 3 | 4 | 5 | 6 |
| Liquid injection property | OK | OK | OK | OK | OK | NG |
| Viscosity (cP) | 320 | 230 | 1,000 | 350 | 720 | 4,200 |
| Latent heat (J/g) | 27.3 | 57 | 0 | 36.3 | 18.7 | 34 |
| Latent heat zone start temperature (°C) | 41.1 | 39.9 | - | 38.7 | 39.8 | 40.1 |
| Latent heat zone end temperature (°C) | 48.7 | 48.3 | - | 50.4 | 49.1 | 49.7 |
| Chain ignition test | NG | NG | OK | NG | OK | NG |
| Rapid charge-discharge test temperature (°C) | 78.5 | 83.2 | 90.8 | 74.6 | 83.5 | 87.5 |
| Surface solidification | OK | OK | NG | OK | NG | OK |
| Leakage evaluation | OK | NG | OK | NG | NG | NG |
| Weight change rate (%) | 0.8 | 12.5 | 0.1 | 2.8 | 3.7 | 4.7 |

## Claims

**1.** A composition, comprising:

a silicone resin component;
a phase change material; and
a filler,
wherein the composition is capable of forming a cured body exhibiting latent heat of 20 J/g or more, and wherein a weight change rate of the cured body after maintaining the cured body under 80°C for 24 hours is less than 1%.

**2.** The composition according to claim 1, wherein the phase change material exhibits the latent heat in a range from 100 J/g to 400 J/g in a temperature range of from 20°C to 100°C.

**3.** The composition according to claim 1, wherein the phase change material is a non-encapsulated phase change material.

**4.** The composition according to claim 1, wherein the phase change material is a paraffin.

**5.** The composition according to claim 1, wherein the filler is flame-retardant particles.

**6.** The composition according to claim 1, wherein the filler has a particle size distribution in which a D50 particle diameter is in ranges from 20 μm to 200 μm.

**7.** The composition according to claim 6, wherein a ratio of the D50 particle diameter of the filler relative to a D10 particle

diameter is greater than a ratio of a D90 particle diameter of the filler relative to the D50 particle diameter.

**8.** The composition according to claim 6, wherein the ratio of the D50 particle diameter of the filler relative to the D10 particle diameter is in ranges from 1.5 to 30.

**9.** The composition according to claim 6, wherein the ratio of the D90 particle diameter of the filler relative to the D50 particle diameter is 7 or less.

**10.** The composition according to claim 6, wherein a ratio of the D90 particle diameter of the filler relative to the D10 particle diameter is 50 or less.

**11.** The composition according to claim 1, wherein an amount of the phase change material is from 10 to 60 parts by weight relative to 100 parts by weight of the silicone resin component.

**12.** The composition according to claim 1, wherein an amount of the filler is from 60 to 200 parts by weight of the filler relative to 100 parts by weight of the silicone resin component.

**13.** The composition according to claim 1, wherein an amount of the filler is from 50 to 1,000 parts by weight of the filler relative to 100 parts by weight of the phase change material.

**14.** A method for preparing the composition of any one of claims 1 to 13, comprising:

mixing the phase change material with the silicone resin component and the filler,
wherein the mixing is performed in a state where the phase change material is in a molten state.

**15.** A cured body of the composition of any one of claims 1 to 13.

**16.** A battery module, comprising:

a plurality of battery cells; and
the composition of any one of claims 1 to 13 or a cured body of the composition,
wherein the composition or the cured body covers at least a part of the plurality of battery cells.

**17.** The battery module according to claim 16, wherein the battery cell is a cylindrical battery cell.

[Figure 1]

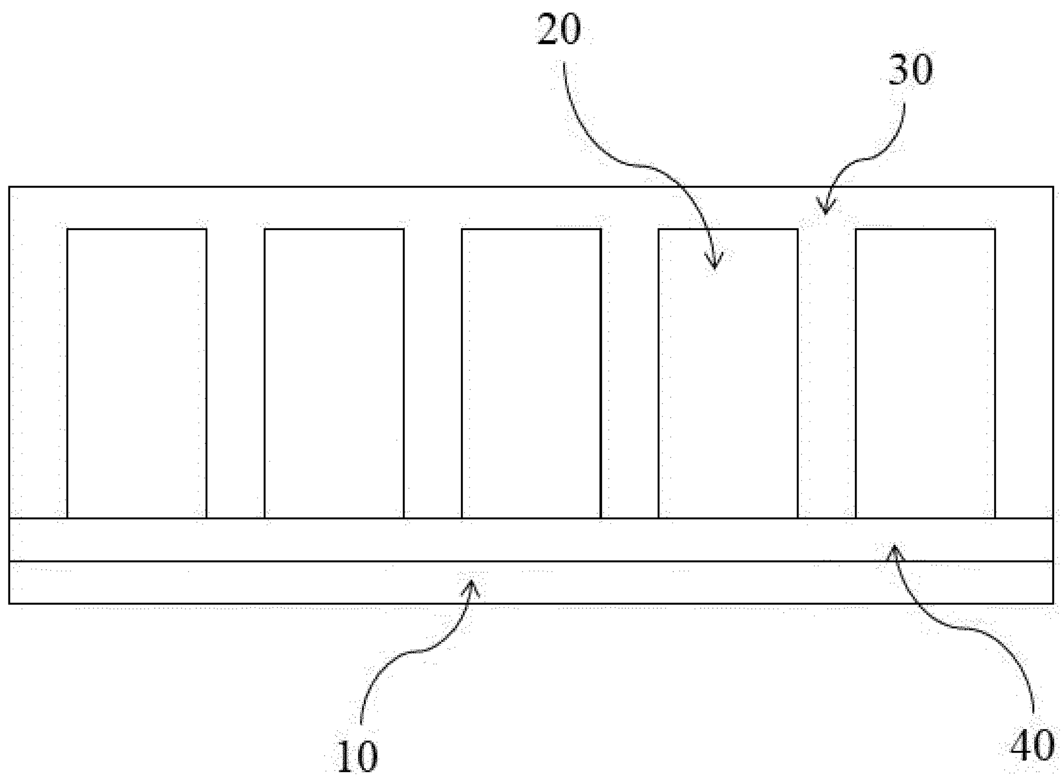


[Figure 2]

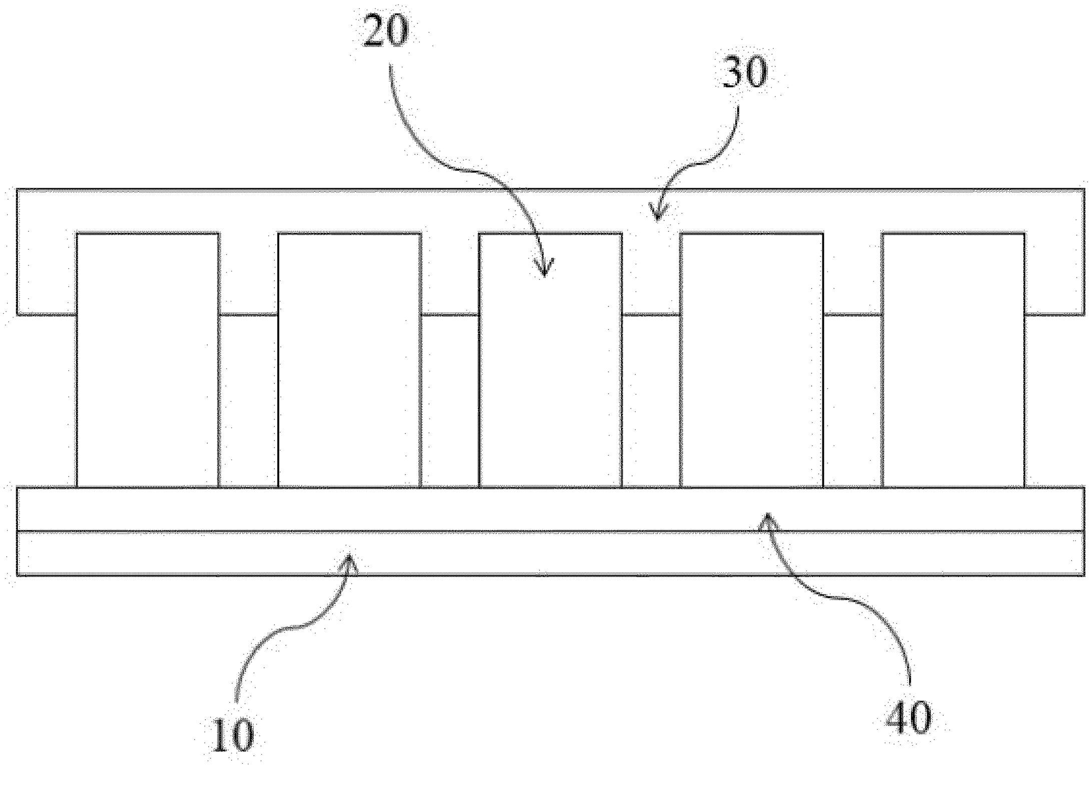

[Figure 3]

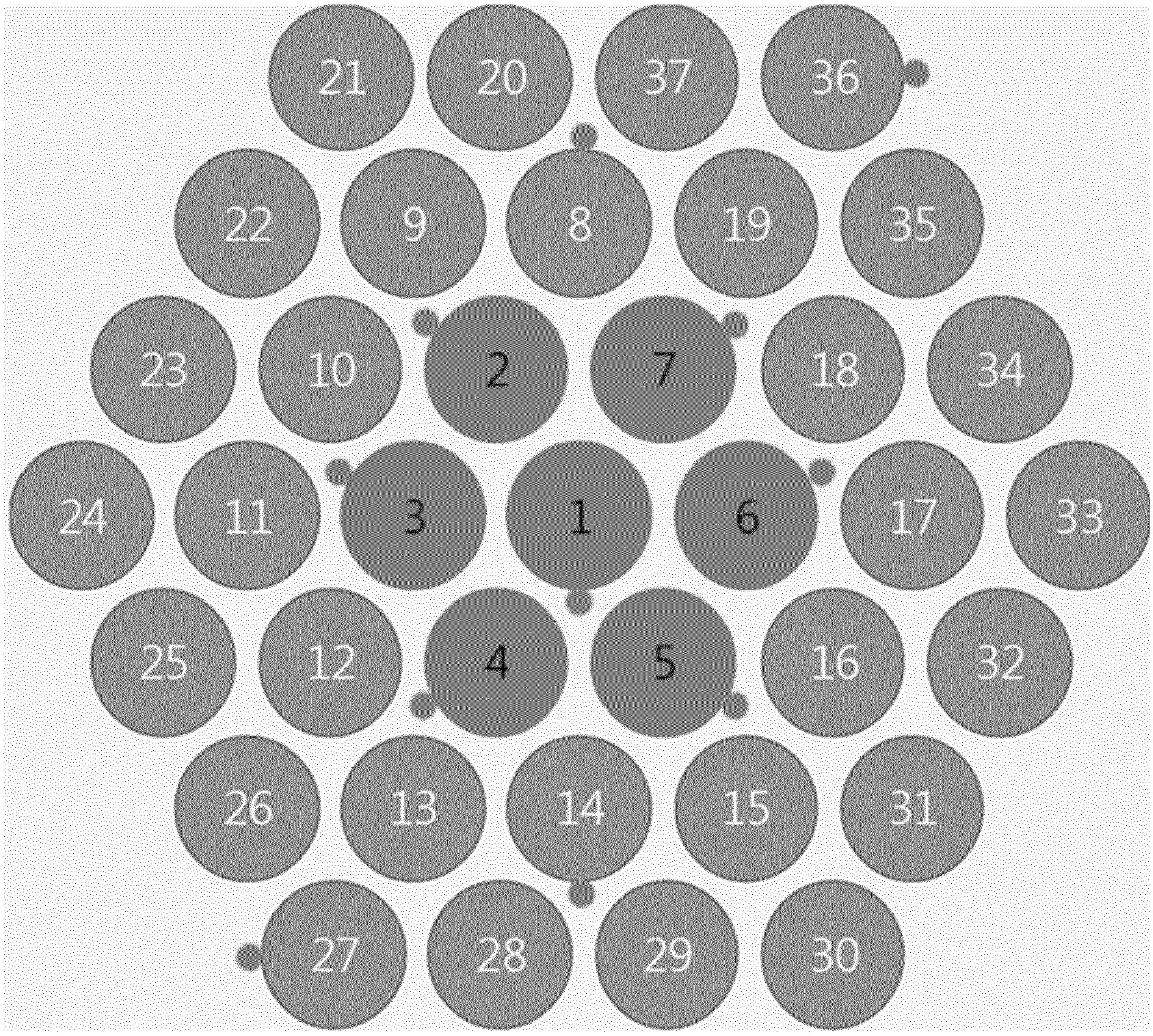
21
20
37
36
22
9
8
19
35
23
10
2
7
18
34
24
11
3
1
6
17
33
25
12
4
5
16
32
26
13
14
15
31
27
28
29
30

**INTERNATIONAL SEARCH REPORT**

International application No. **PCT/KR2023/012910**

**A. CLASSIFICATION OF SUBJECT MATTER**

**C08K 13/02**(2006.01)i; **C08K 3/013**(2018.01)i; **C09K 5/02**(2006.01)i; **H01M 10/653**(2014.01)i; **H01M 50/218**(2021.01)i

According to International Patent Classification (IPC) or to both national classification and IPC

**B. FIELDS SEARCHED**

Minimum documentation searched (classification system followed by classification symbols)

C08K 13/02(2006.01); C08F 220/14(2006.01); C08F 283/06(2006.01); C08G 77/12(2006.01); C08J 3/24(2006.01); C08K 3/013(2018.01); C08K 5/053(2006.01); C08L 83/00(2006.01); C09K 21/02(2006.01); C09K 5/06(2006.01); F28D 20/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 잠열(latent heat), 상전이 물질(phase change material), 실리콘 수지(silicone resin), 중량 변화율(weight change rate), 비캡슐화(non-encapsulate), 파라핀(paraffin), 조성물(composition)

**C. DOCUMENTS CONSIDERED TO BE RELEVANT**

| Category* | Citation of document, with indication, where appropriate, of the relevant passages | Relevant to claim No. |
|---|---|---|
| X | KR 10-2019-0139141 A (ROGERS CORPORATION) 17 December 2019 (2019-12-17)<br>See paragraphs [0016], [0024], [0032], [0035], [0039], [0047]-[0050] and [0064]-[0076]. | 1-17 |
| A | KR 10-2020-0044814 A (ROGERS CORPORATION) 29 April 2020 (2020-04-29)<br>See entire document. | 1-17 |
| A | KR 10-2004-0081115 A (MERCK PATENT GMBH) 20 September 2004 (2004-09-20)<br>See entire document. | 1-17 |
| A | KR 10-2014-0013920 A (HUTCHINSON) 05 February 2014 (2014-02-05)<br>See entire document. | 1-17 |
| A | CN 111647116 A (SOUTHWEST UNIVERSITY OF SCIENCE AND TECHNOLOGY) 11 September 2020 (2020-09-11)<br>See entire document. | 1-17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 December 2023** | **14 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/012910**

**C. DOCUMENTS CONSIDERED TO BE RELEVANT**

| Category* | Citation of document, with indication, where appropriate, of the relevant passages | Relevant to claim No. |
|---|---|---|
| PX | KR 10-2023-0108238 A (LG CHEM, LTD.) 18 July 2023 (2023-07-18)<br>See paragraphs [0040], [0159], [0161], [0209]-[0219] and [0225]-[0228]; and table 1. | 1-17 |
| PX | KR 10-2023-0051094 A (LG CHEM, LTD.) 17 April 2023 (2023-04-17)<br>See paragraphs [0035], [0134], [0136], [0184]-[0190] and [0203]; and table 1. | 1-17 |
| PX | KR 10-2023-0051093 A (LG CHEM, LTD.) 17 April 2023 (2023-04-17)<br>See paragraphs [0033], [0035], [0122]-[0123], [0158]-[0159], [0204]-[0211] and [0214]; and table 1. | 1-17 |

Form PCT/ISA/210 (second sheet) (July 2022)

**INTERNATIONAL SEARCH REPORT**
**Information on patent family members**

International application No.
**PCT/KR2023/012910**

| Patent document cited in search report | Publication date (day/month/year) | Patent family member(s) | Publication date (day/month/year) |
|---|---|---|---|
| KR 10-2019-0139141 A | 17 December 2019 | CN 110577825 A | 17 December 2019 |
| | | DE 102019114858 A1 | 12 December 2019 |
| | | GB 2576072 A | 05 February 2020 |
| | | GB 2576072 B | 07 September 2022 |
| | | TW 202000850 A | 01 January 2020 |
| | | US 2019-0375939 A1 | 12 December 2019 |
| | | US 2022-0081567 A1 | 17 March 2022 |
| KR 10-2020-0044814 A | 29 April 2020 | CN 111051464 A | 21 April 2020 |
| | | DE 112018004799 T5 | 18 June 2020 |
| | | GB 2578987 A | 03 June 2020 |
| | | GB 2578987 B | 08 February 2023 |
| | | JP 2020-532609 A | 12 November 2020 |
| | | JP 7337776 B2 | 04 September 2023 |
| | | TW 201912759 A | 01 April 2019 |
| | | US 11535783 B2 | 27 December 2022 |
| | | US 2020-0172783 A1 | 04 June 2020 |
| | | WO 2019-046154 A1 | 07 March 2019 |
| KR 10-2004-0081115 A | 20 September 2004 | AU 2002-360968 A1 | 24 July 2003 |
| | | CA 2472278 A1 | 17 July 2003 |
| | | DE 10200318 A1 | 17 July 2003 |
| | | EP 1461398 A1 | 29 September 2004 |
| | | JP 2005-514491 A | 19 May 2005 |
| | | US 2005-0104029 A1 | 19 May 2005 |
| | | WO 03-057795 A1 | 17 July 2003 |
| KR 10-2014-0013920 A | 05 February 2014 | BR 102013017724 A2 | 10 February 2015 |
| | | CN 103571192 A | 12 February 2014 |
| | | EP 2690141 A1 | 29 January 2014 |
| | | EP 2690141 B1 | 18 October 2017 |
| | | FR 2993894 A1 | 31 January 2014 |
| | | FR 2993894 B1 | 01 August 2014 |
| | | JP 2014-028948 A | 13 February 2014 |
| | | MX 2013008594 A | 24 January 2014 |
| | | US 2014-0030458 A1 | 30 January 2014 |
| | | US 9676941 B2 | 13 June 2017 |
| CN 111647116 A | 11 September 2020 | CN 111647116 B | 26 January 2021 |
| KR 10-2023-0108238 A | 18 July 2023 | WO 2023-132737 A1 | 13 July 2023 |
| KR 10-2023-0051094 A | 17 April 2023 | WO 2023-059153 A1 | 13 April 2023 |
| KR 10-2023-0051093 A | 17 April 2023 | WO 2023-059154 A1 | 13 April 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220108817
- KR 1020230113206